# EUROPÄISCHE PATENTSCHRIFT

(11) **EP 0 422 254 B1**
(45) Veröffentlichungstag und Bekanntmachung des Hinweises auf die Patenterteilung: **28.04.1993**
(21) Anmeldenummer: 89118708.0
(22) Anmeldetag: 09.10.1989
(51) Int. Cl.: B05B 15/12, E04B 9/22, B01D 46/12

(54) **Filterdecke, insbesondere für Spritzkabinen**
Filter ceiling specially for spray booths
Plafond filtrant spécialement pour chambres de pulvérisation

(43) Veröffentlichungstag der Anmeldung: 17.04.1991
(73) Patentinhaber: LUTRO Luft- und Trockentechnik GmbH, D-70771 Leinfelden-Echterdingen (DE)
(72) Erfinder: Buchmann, Günter, D-7024 Filderstadt 4 (DE)
(74) Vertreter: Reinhard - Skuhra - Weise & Partner

(56) Entgegenhaltungen:
- DE-B- 2 217 098
- DE-C- 947 569
- DE-U- 7 048 194
- US-A- 4 521 227

## Beschreibung

Die Erfindung betrifft eine Filterdecke, insbesondere für Spritzkabinen, gemäß dem Oberbegriff des Patentanspruchs 1.

Eine Filterdecke der eingangs genannten Art ist aus der DE-PS 22 17 098 bekannt. Bei dieser Filterdecke sind die einzelnen Filterdeckenteile entlang einer Kante schwenkbar gegenüber dem Rahmen gelagert. Zum Auswechseln der Filterelemente ist bei dieser Filterdecke ein Verschluß zu lösen, woraufhin das betreffende Filterdeckenteil völlig nach unten herunterklappt, d.h. in eine etwa 90°-Stellung aus der Filterflächenebene heraus. Bei einer solchen Filterdecke ist es nachteilig daß die mit dem Austausch beschäftigte Person das gesamte Gewicht des Filterdeckenteils aufzunehmen hat und nach Lösen des Verschlusses jedes Filterdeckenteil in eine etwa vertikale Stellung nach unten geführt werden muß. Da solche Filterdeckenteile ein Gesamtgewicht von ca. 30 kg haben, stellt das Herunterklappen der Filterdeckenteile einen nicht ganz ungefährlichen und Kraft erfordernden Vorgang dar.

Ein weiterer Nachteil besteht darin, daß nach dem Auflegen der Filtermatte auf das jeweilige Filterdeckenteil die Filtermatte nach unten wegrutscht, da das Filterdeckenteil vollständig nach unten geschwenkt ist. Da die Filtermatten in Form von Rollenmaterial zur Verfügung stehen, ergeben sich Schwierigkeiten beim Auflegen der Filtermatten. Das Ersetzen der Filtermatten bedarf mindestens zweier Personen, von denen eine die Filtermatte hält, während die andere das Filterdeckenteil so weit nach oben bewegt, bis die Filtermatte in den Rahmen eingeklemmt wird und das Filterdeckenteil in seine in Flucht zur Filterebene liegende Position zurückverschwenkt werden kann.

Demgegenüber liegt der Erfindung die Aufgabe zugrunde, eine Filterdecke der eingangs genannten Art so zu verbessern, daß ein leichtes und sicheres Einlegen bzw. Austauschen der Filtermatten ermöglicht wird.

Diese Aufgabe wird erfindungsgemäß durch die Merkmale des Patentanspruchs 1 gelöst.

Weitere Ausgestaltungen der Filterdecke ergeben sich aus den Unteransprüchen.

Die Filterdecke hat den Vorteil, daß ein Teil des Gewichts jedes Filterdeckenteils beim Herabklappen durch eine Federeinrichtung aufgenommen wird. Gemäß einer bevorzugten Ausführungsform ist die Federeinrichtung derart ausgelegt, daß die mit dem Filtermattenaustausch beschäftigte Person nur noch 25 % des Gesamtgewichts des Filterdeckenmaterials halten muß, wenn die Filterdecke nach unten verschwenkt wird. Ein weiterer Vorteil besteht darin, daß das Filterdeckenteil nur über einen vorgegebenen Winkel, vorzugsweise 45°, nach unten verschwenkt wird. Jedes Filterdeckenteil läßt sich damit nur bis in eine durch eine Schräglage definierte Position verschwenken, was den Austausch und insbesondere das Auflegen einer neuen Filtermatte auf das Filterdeckenteil erleichtert. Insbesondere durch die 45°-Lage bzw. Schräglage des Filterdeckenteils wird das Auflegen einer neuen Filtermatte wesentlich vereinfacht, da die Filtermatte nicht vertikal nach unten wegrutschen kann, sondern auf der oberen Fläche des Filterdeckenteils liegen bleibt. Der Absenkwinkel jedes Filterdeckenteils ist gemäß der Erfindung vorteilhafterweise auf einen vorgegebenen Winkel, vorzugsweise 45°, begrenzt, d.h. das Filterdeckenteil kann nicht unbeabsichtigt völlig nach unten klappen.

Bei einer weiteren Ausführungsform ist vorteilhaft, daß die Filterdeckenteile sowohl im Bereich der scharnierartigen Verbindung und/oder auf der gegenüberliegenden Seite durch Schraubmittel am Rahmen befestigbar sind, die eine Nachstellung ermöglichen. Auf diese Weise wird erreicht, daß jedes Filterdeckenteil auch im Bereich der Scharniereinrichtung nachstellbar ist, d.h. der Abstand zwischen dem Filterdeckenteil einerseits und dem Rahmen andererseits auch im Bereich der Scharniereinrichtungen nachstellbar bzw. justierbar ist. Dieser Vorteil wird insbesondere durch Verwendung von sogenannten Augenschrauben erreicht, die in einem am Rahmen angesetzten Lager schwenkbar angeordnet sind. Derartige gelenkig gelagerte Schrauben bzw. Augenschrauben finden vorteilhafterweise auch Einsatz auf der zur Scharniereinrichtung gegenüberliegenden Befestigung der Filterdeckenteile gegenüber dem Rahmen.

Im folgenden wird eine bevorzugte Ausführungsform einer Filterdecke anhand der Zeichnung zur Erläuterung weiterer Merkmale beschrieben. Es zeigen:
- Fig. 1: eine perspektivische Teilschnittansicht einer Filterdecke gemäß der Erfindung,
- Fig. 2: eine Fig. 1 entsprechende Ansicht zur Veranschaulichung der bei der Filterdecke verwendbaren Federeinrichtung, und
- Fig. 3: eine Ansicht einer Ausführungsform der Federeinrichtung entsprechen der Linie III-III in Fig. 2 von zwei zueinder benachbarten Filterdeckenteilen mit jeweils einer zugehörigen Federeinrichtung.

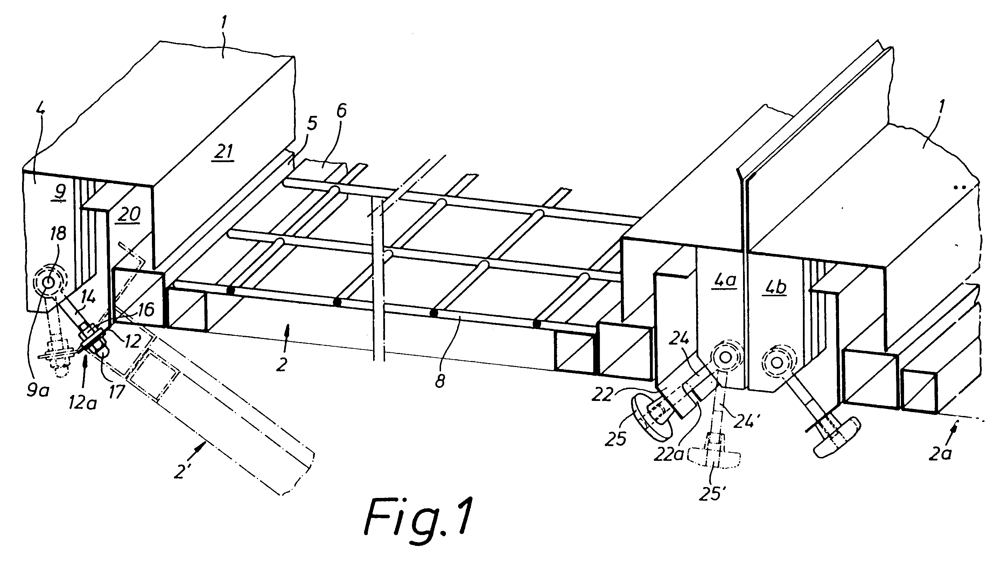

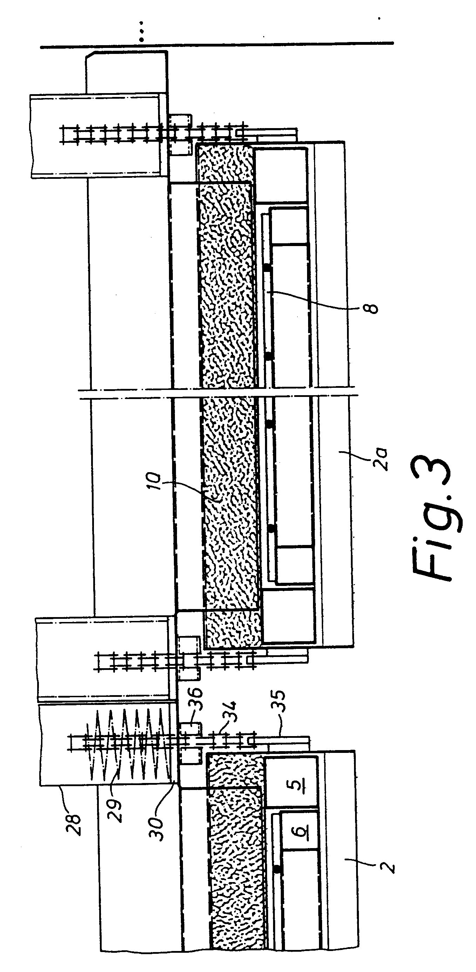

Fig. 1 zeigt eine Teilansicht einer Filterdecke, die aus einem festen Rahmen 1, auch als Klemmrahmen bezeichnet, und einer Mehrzahl von Filterdeckenteilen 2, 2a besteht. Der Rahmen 1 ist in an sich bekannter Weise im Gebäude montiert und weist an seiner an der Gebäudewand befindlichen Längskante sowie in vorbestimmter Weise parallel hierzu im Raum selbst verlaufende Lagereinrichtungen 4, 4a, 4b usw. auf. Auf diese Weise wird eine Filterdecke gebildet, die aus mehreren parallel zueinander liegenden Reihen von Filterdeckenteilen besteht, wie Fig. 1 und 3 zeigen. Jede Reihe weist eine Mehrzahl von nebeneinanderliegenden, eine in Längsrichtung verlaufende und eine gemeinsame Schwenkachse besitzende Filterdeckenteile 2 bzw. 2a auf. Wie Fig. 1 zeigt, besteht jedes Filterdeckenteil aus einem jedes Deckenteil definierenden Deckenteilrahmen 5, der einen inneren Deckenteilrahmen 6 umgibt. Der Deckenteilrahmen 6 dient zur Lagerung von Kreuzstäben 8 oder dergleichen, auf welchen die in Fig. 3 gezeigte Filtermatte 10 aufliegt. Bei der dargestellten Ausführungsform ist an dem Deckenteilrahmen 5 ein wenigstens nach unten verlaufender Flansch 12 vorgesehen, an dem eine gelenkig gelagerte Schraube 14, vorzugsweise eine Augenschraube, befestigt ist. Die Augenschraube 14 ist in jeweils einer ihr zugeordneten Lagereinrichtung 4 schwenkbar gelagert und zwar um die Schwenkachse 18, die senkrecht zur Zeichnungsebene nach Fig. 1 steht. Damit läßt sich jedes Filterdeckenteil um einen Winkel verschwenken, wie dies in Fig. 1 durch die gestrichelte Darstellung des Filterdeckenteils 2' veranschaulicht ist.

Gemäß einer bevorzugten Ausführungsform besteht die Lagereinrichtung 4 aus zwei vom Hauptrahmen 1 nach unten abstehenden Laschen 9 mit zueinander fluchtenden Bohrungen 9a, in welche die Augenschraube 14 eingesetzt ist. Die Augenschraube 14 wird vorzugsweise durch zwei Muttern 16, 17 an dem Flansch 12 fixiert, so daß die Lagereinrichtung 4, die Augenschraube 14 und der Flansch wie ein Scharnier wirken. Die mit 18 bezeichnete Achse definiert bei dieser Ausführungsform die Schwenkachse des Filterdeckenteils 2. Bei dieser Ausführungsform ist, wie Fig. 1 zeigt, der Flansch 12 vom Rahmen 5 in Richtung auf die Achse 18 leicht abgeschrägt verlaufend ausgebildet, so daß die Länge der die Lagereinrichtung 4 bildenden Laschen 9 kurz gehalten werden kann im Vergleich zu einer Ausführungsform, bei welcher der Flansch 12 vom Rahmen 5 vertikal nach unten abstehend ausgebildet ist.

Der Flansch 12 weist eine nach oben verlaufende Verlängerung 20 auf, die im wesentlichen der stirnseitigen Begrenzung der in Fig. 3 gezeigten Filtermatte 10 dient. Zur Durchführung oder zum Hineinschieben der Augenschraube 14 in den Flansch 12 ist dieser mit einem Schlitz oder einer Bohrung 12a versehen. Der Rahmen 1 ist mit einer vertikal nach unten in Richtung auf den Rahmen 5 weisenden Kante 21 versehen, die in der in Fig. 3 gezeigten Weise in die Filtermatte 10 eingreift und die Filtermatte 10 klemmend hält.

Auf der zur Schwenkachse 18 gegenüberliegenden Seite jedes Filterdeckenteils 2 ist an dem Rahmen 5 ein Flansch 22 vorgesehen. Der Flansch 22 ist vorzugsweise gleich gestattet wie der Flansch 12 mit seiner Verlängerung 20 und weist einen Schlitz 22a auf, in welchem eine Schraube, vorzugsweise eine Augenschraube 24, mit Hilfe einer Mutter oder eines Sterngriffes 25 zum Zwecke der Fixierung des Filterdeckenteils 2 in der in Fig. 1 gezeigten Position einschiebbar und fixierbar ist. Jede Augenschraube 24 ist in einer Lagereinrichtung 4a gelagert. Die Lagereinrichtung 4a entspricht im wesentlichen der Lagereinrichtung 4. Zum Herabschwenken des Filterdeckenteils 2 nach Fig. 1 sind die zugehörigen Sterngriffe 25 zu lösen. Um die Sterngriffe 25 zusammen mit der zugehörigen Augenschraube 24 um beispielsweise 45° in die in Fig. 1 gestrichelt gezeigte Position zu verlagern, muß die Augenschraube 24 gegenüber dem zugehörigen Flansch bzw. Schlitz 22a gelöst bzw. außer Eingriff gebracht werden. Dann läßt sich das betreffende Filterdeckenteil 2 um die Achse 18 im Uhrzeigersinn nach unten verschwenken.

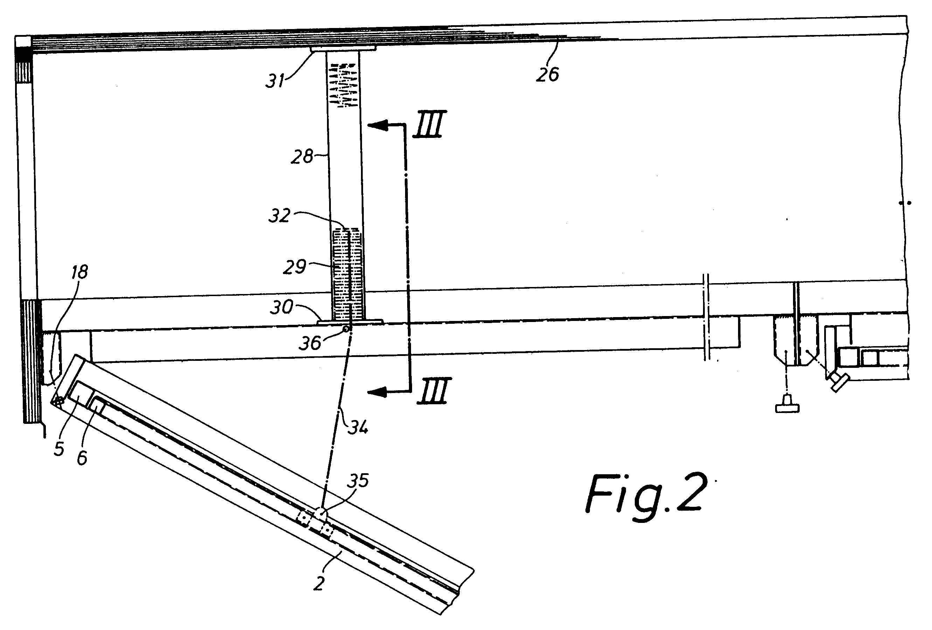

Zur Begrenzung der Schwenkbewegung des Deckenteils 2 in die in Fig. 1 gezeigte, mit 2' bezeichnete Position dient gemäß einer bevorzugten Ausführungsform eine Federeinrichtung, die den in Fig. 2 gezeigten Aufbau hat. In dem Deckenbelüftungskanal, der zwischen dem horizontal verlaufenden Filterdeckenteil 2 und der Gebäudedecke 26 definiert ist, befindet sich ein vertikal positioniertes Rohr 28 aus Metall oder dergleichen, das kreisförmiges oder vorzugsweise viereckiges Profil hat und eine mit 29 bezeichnete Druckfeder aufnimmt. Die Druckfeder 29 ist durch eine am Rohr 28 fest angeordnete, untere Platte 30 gelagert, während das Rohr 28 durch eine mit 31 bezeichnete obere Platte an der Decke 26 befestigt ist. Auf der Oberseite der Druckfeder 29 liegt eine innerhalb des Rohres 28 verschiebbare Platte 32 auf, die mit dem einen Ende eines Seils, Kabels oder einer Rollenkette 34 in fester Verbindung steht. Das andere Ende des Seils, Kabels oder der Rollenkette 34 ist an dem Filterdeckenteil 2 an einem Punkt 35 befestigt. Dieser Befestigungspunkt 35 befindet sich vorzugsweise an einer Seitenkante des Filterdeckenteils 2 in einem Abstand von einem Drittel der Gesamtlänge der Seitenkante des Filterdeckenteils 2 zur Schwenkachse 18. Die Federkonstante der Druckfeder 29 und/oder die Position der Druckfeder 29 gegenüber dem Filterdeckenteil 2 wird abhängig von der Größe bzw. Länge oder dem Gewicht der Filterdeckenteile 2 bestimmt. Die Federkonstante der Druckfeder 29 kann so bei einer größeren Last des Filterdeckenteils größer gewählt werden oder die Position des Rohrs 28 in Fig. 2 wird zur Schwenkachse 18 weiter entfernt vorgesehen. Bei Verwendung einer Rollenkette 34 wird an der unteren Platte 30 eine Gleitrolle 36 als Führung für die Rollenkette 34 vorgesehen. Durch die Länge der Druckfeder 29 und/oder des Rohres 28 wird der maximale Schwenkwinkel des Filterdeckenteils 2 festgelegt. Bei der in Fig. 2 gezeigten Ausführungsform ist der Schwenkwinkel auf 45° begrenzt. Bei Erreichen dieses maximalen Schwenkwinkels ist die Druckfeder 29 vollständig komprimiert.

Die in Verbindung mit Fig. 2 beschriebene Federeinrichtung kann durch andere, gleichermaßen wirkende Federeinrichtungen ersetzt werden, beispielsweise auch durch entsprechend dimensionierte Gasfedern. Die Zahl der Federeinrichtungen kann ebenfalls geändert werden. Bei der beschriebenen Ausführungsform sind pro Filterdeckenteil jeweils zwei Federeinrichtungen vorgesehen, die entsprechend Fig. 3 an der Seitenfläche des Rahmens 5 angelenkt sind. Anstelle zweier Federeinrichtungen der in Fig. 2 gezeigten Art pro Filterdeckenteil können zwei oder mehrere Gasfedern oder dergleichen vorgesehen sein.

Fig. 3 zeigt zwei zueinander benachbarte Filterdeckenteile 2, 2a in ihrer hochgeklappten, d.h. horizontalen Position, in welcher die Schraubmittel 24, 25 sich in Eingriff befinden mit dem Flansch 22. Die vorzugsweise verwendete Rollenkette 34 steht mit ihrem unteren Ende in fester Verbindung mit einer an der Seitenfläche bzw. Seitenkante jedes Filterdeckenteils vorgesehenen Befestigungsmittels 35, beispielsweise in Form eines Zapfens. Die Rollenkette 34 ist durch eine Verschlußfeder gegenüber dem Zapfen gesichert. Die mit 30 bezeichnete Platte weist eine Öffnung 38 zur Durchführung der Rollenkette 34 auf. Zur Fixierung des oberen Endes der Rollenkette 34 kann anstelle einer Platte 32 ein zylindrisches Element vorgesehen sein, das mit einer Abdeckplatte versehen ist, die geringfügig kleiner ist als die lichte Querschnittsfläche des Rohres 28, während das zylindrische, von dieser Platte nach unten abstrebende Element einen Außendurchmesser hat, der kleiner ist als der Innendurchmesser der Druckfeder.

Aus vorstehender Beschreibung und den zugehörigen Zeichnungen ist ersichtlich, daß bei Einnahme der horizontalen Position durch die Filterdeckenteile 2, 2a die zugehörigen Befestigungsschrauben sich jeweils in einer Schräglage, beispielsweise unter Einhaltung eines 45°-Winkels, gegenüber der Vertikalen befinden. Die auf der zur Schwenkachse 18 entfernt liegenden Seite angeordneten Schraubmittel stellen dabei einen sogenannten Schnellverschluß dar. Die Augenschrauben 14 sind am Flansch 12 vorzugsweise durch eine selbstsichernde Mutter bzw. Hutmutter 17 mit einer auf der anderen Flanschseite aufgeschraubten Mutter 16 befestigt. Im Bedarfsfall kann bei der erfindungsgemäßen Filterdecke jedes Filterdeckenteil auch auf der Seite der Schwenkachse 18 durch Anziehen der Mutter 17 nachgestellt werden.

## Patentansprüche

1. Filterdecke, insbesondere für Spritzkabinen,
bestehend aus mehreren Filterdeckenteilen (2, 2a), die jeweils entlang einer Seitenkante durch Scharniereinrichtungen (4, 12, 14, 16, 17, 18) aus der Filterebene schwenkbar an einem Rahmen (1) gelagert sind, wobei die zur Schwenkachse (18) entfernt liegende Kante der Filterdeckenteile (2, 2a) durch Schraubmittel (22, 22a, 24, 25) am Rahmen (1) arretierbar ist,
**dadurch gekennzeichnet**,
daß oberhalb der Filterebene Federeinrichtungen (28, 19) vorgesehen sind,
daß jedes Filterdeckenteil (2, 2a) mit wenigstens einer Federeinrichtung (28, 29) in Verbindung steht,
daß die Federeinrichtungen (28, 29) einen vorbestimmten Federweg zur Begrenzung des Schwenkwinkels des zugehörigen Filterdeckenteils (2, 2a) haben.

2. Filterdecke nach Anspruch 1, dadurch gekennzeichnet, daß die Schraubmittel (22, 22a, 24, 25) nachstellbar sind.

3. Filterdecke nach Anspruch 1, dadurch gekennzeichnet, daß die Scharniereinrichtungen (4, 12, 14, 16, 17, 18) aus gelenkig am Rahmen (1) gelagerte Schraubeinrichtungen bestehen.

4. Filterdecke nach Anspruch 3, dadurch gekennzeichnet, daß die Schraubeinrichtungen (4, 12, 14, 16, 17, 18) jeweils eine Augenschraube (14) oder dergleichen aufweisen, die schwenkbar in einem am Rahmen angeordneten Lager (4) gelagert sind, daß jede Augenschraube durch einen Schlitz oder eine Öffnung (12a) eines Flansches (12) des Filterdeckenteils (2, 2a) hindurchreicht, der von jedem Filterdeckenteil (2, 2a) nach unten wegsteht, und
daß die Augenschraube (14) durch Muttern (16, 17) oder dergleichen am Flansch (12) fixiert ist.

5. Filterdecke nach Anspruch 2, dadurch gekennzeichnet, daß die Schraubmittel (22, 22a, 24, 25) durch Augenschrauben oder dergleichen gebildet sind, die jeweils schwenkbar in am Rahmen (1) vorgesehenen Lagern (4a, 4b) gelagert sind, daß jedes Filterdeckenteil (2, 2a) an seiner zur Schwenkachse (18) gegenüberliegenden Kante einen Flansch (22) mit Schlitzen (22a) oder dergleichen trägt, in welche die Augenschrauben (24) einrastbar sind.

6. Filterdecke nach einem der vorangehenden Ansprüche, dadurch gekennzeichnet, daß die Flansche (12, 22) mit ihrem vom Filterdeckenteil (2, 2a) nach unten abstehenden Ende gegenüber der Vertikalen schräg verlaufen.

## Claims

1. A filter cover, in particular for spray booths, consisting of several filter cover portions (2, 2a) which are respectively mounted on a frame (1) along a side edge by means of hinge means (4, 12, 14, 16, 17, 18) in such fashion that they can be pivoted out from the filter plane along a side edge by means of hinge means (4, 12, 14, 16, 17, 18), the edge of the filter cover portions (2, 2a) remote from the swivelling axis (18) being lockable by screw means (22, 22a, 24, 25) on the frame (1),
characterized in that spring means (28, 19) are provided above the filter plane, that each filter cover element (2, 2a) is connected to at least one spring means (28, 29), and that the spring means (28, 29) have a predetermined spring excursion to limit the pivoting angle of the associated filter cover portion (2, 2a).

2. A filter cover according to claim 1, characterized in that the screw means (22, 22a, 24, 25) are re-adjustable.

3. A filter cover according to claim 1, characterized in that the hinge means (4, 12, 14, 16, 17, 18) consist of screw means mounted on the frame (1) in articulated fashion.

4. A filter cover according to claim 3, characterized in that the screw means (4, 12, 14, 16, 17, 18) comprise in each case an eye bolt or the like, which are pivot-mounted on a bearing (4) disposed on the frame, that each eye bolt extends through a slot or an aperture (12a) of a flange (12) of the filter cover portion (2, 2a), which projects downwards from each filter cover portion and that the eye bolt (14) is fixed to the flange (12) by nuts (16, 17) or the like.

5. A filter cover according to claim 2, characterized in that the screw means (22, 22a, 24, 25) are formed by eye bolts or the like which are in each case pivot-mounted on bearings (4a, 4b) provided on the frame (1), that each filter cover portion (2, 2a) supports a flange (22) with slots (22a) or the like on its edge opposite to the swivelling axis (18), into which the eye bolts (24) can lock.

6. A filter cover according to any of the preceding claims, characterized in that the flanges (12, 22) extend oblique to the vertical with their edge projecting downwards from the filter cover portion (2, 2a).

## Revendications

1. Plafond filtrant, notamment pour cabines de peinture au pistolet constitué de plusieurs éléments de plafond filtrant (2, 2a) qui sont montés chacun de façon à pouvoir basculer sur un châssis (1), à partir du plan du filtre et le long d'une arête latérale, à l'aide de dispositifs du type charnière (4, 12, 14, 16, 17, 18), l'arête des éléments de plafond filtrant (2, 2a) qui est située à l'opposé de l'axe de basculement (18) étant agencée de façon à pouvoir être immobilisée sur le châssis (1) à l'aide de moyens filetés (22, 22a, 24, 25),
caractérisé :
en ce que des dispositifs élastiques (28, 29) sont prévus au-dessus du plan du filtre,
en ce que chaque élément de plafond filtrant (2, 2a) est associé à au moins un dispositif élastique (28, 29) et
en ce que les dispositifs élastiques (28, 29) ont une course élastique préfixée permettant de imiter l'angle de basculement de l'élément de plafond filtrant (2, 2a) associé.

2. Plafond filtrant suivant la revendication 1, caractérisé en ce que les moyens filetés (22, 22a, 24, 25) sont réglables.

3. Plafond filtrant suivant la revendication 1, caractérisé en ce que les dispositifs du type charnière (4, 12, 14, 16, 17, 18) sont constitués de dispositifs filetés montés d'une manière articulée sur le châssis (1).

4. Plafond filtrant suivant la revendication 3, caractérisé
en ce que les dispositifs filetés (4, 12, 14, 16, 17, 18) comprennent chacun un boulon à oeillet (14) ou moyen analogue qui est monté de façon à pouvoir basculer dans un palier (4) disposé sur le châssis,
en ce que chaque boulon à oeillet traverse une fente ou une ouverture (12a) d'un rebord (12) de l'élément de plafond filtrant (2, 2a), lequel rebord est orienté vers le bas à partir de l'élément de plafond filtrant (2, 2a) correspondant, et
en ce que le boulon à oeillet (14) est immobilisé sur le rebord (12) à l'aide d'écrous (16, 17) ou de moyens analogues.

5. Plafond filtrant suivant la revendication 2, caractérisé :
en ce que les moyens filetés (22, 22a, 24, 25) sont constitués par des boulons à oeillets ou moyens analogues qui sont montés chacun de façon à pouvoir basculer dans des paliers (4a, 4b) prévus sur le châssis (1) et
en ce que, sur son arête opposée à l'axe de basculement (18), chaque élément de plafond filtrant (2, 2a) porte un rebord (22) comportant des fentes (22a) ou des moyens analogues dans lesquels les boulons à oeillet (24) peuvent être enclenchés.

6. Plafond filtrant suivant l'une des revendications précédentes, caractérisé en ce qu'à leur extrémité tournée vers le bas à partir de l'élément de plafond filtrant (2, 2a), les rebords (12, 22) sont inclinés par rapport à la verticale.
